# EUROPÄISCHE PATENTSCHRIFT

(11) **EP 2 205 405 B1**
(45) Veröffentlichungstag und Bekanntmachung des Hinweises auf die Patenterteilung: **19.10.2011**
(21) Anmeldenummer: 08802971.5
(22) Anmeldetag: 07.08.2008
(51) Int. Cl.: B25F 5/00, B25F 5/02, F16F 7/01, F16F 7/10

(54) **ZUSATZHANDGRIFFVORRICHTUNG**
AUXILIARY HANDLE DEVICE
SYSTEME DE POIGNEE SUPPLEMENTAIRE

(30) Priorität: 28.09.2007 DE 102007046760
(43) Veröffentlichungstag der Anmeldung: 14.07.2010
(73) Patentinhaber: Robert Bosch GmbH, 70442 Stuttgart (DE)
(72) Erfinder: EICHER, Roswitha, 70794 Filderstadt (DE); HEESS, Stefan, 70771 Leinfelden-Echterdingen (DE); MAUTE, Joerg, 71069 Sindelfingen (DE); ESENWEIN, Florian, 73066 Uhingen-Holzhausen (DE); EICHER, Bernhard, 70794 Filderstadt (DE); SCHULLER, Marcus, 72135 Dettenhausen (DE)
(86) Internationale Anmeldenummer: PCT/EP2008/060377
(87) Internationale Veröffentlichungsnummer: WO 2009/043627

(56) Entgegenhaltungen:
- EP-A- 0 156 387
- DE-A1- 10 340 383

## Beschreibung

### Stand der Technik

Die Erfindung geht aus von einer Zusatzhandgriffvorrichtung nach dem Oberbegriff des Anspruchs 1.

Es ist bereits eine Zusatzhandgriffvorrichtung für eine Handwerkzeugmaschine bekannt. Die Zusatzhandgriffvorrichtung weist einen Zusatzhandgriff auf und eine Dämpfungseinheit zwecks einer Dämpfung bzw. einer Reduzierung von Schwingungen im Betrieb der Handwerkzeugmaschine. Eine gattingsgemäßvorrichtung ist aus EP 156 387 A bekannt. Vorteile der Erfindung

Die Erfindung geht aus von einer Zusatzhandgriffvorrichtung, insbesondere für eine Handwerkzeugmaschine, mit einem Zusatzhandgriff und einer Dämpfungseinheit.

Es wird vorgeschlagen, dass die Dämpfungseinheit zumindest zwei Tilgermassenelemente aufweist, die dazu vorgesehen sind, zu einer Schwingungsdämpfung Stöße gegeneinander auszuführen. In diesem Zusammenhang soll unter einem "Zusatzhandgriff" ein Bereich und/oder ein Bauteil und/oder ein Element verstanden werden, der bzw. das zu einem Anlegen, insbesondere einem Umgreifen, durch eine Hand oder mehrere Hände eines Bedieners, zwecks einer Führung einer Handwerkzeugmaschine mittels der Zusatzhandgriffvorrichtung, vorgesehen ist und insbesondere neben einem weiteren Handgriff, insbesondere dem Haupthandgriff, zusätzlich an der Handwerkzeugmaschine anbringbar ist, wobei die Zusatzhandgriffvorrichtung seitlich an der Handwerkzeugmaschine angeordnet ist und/oder werkzeuglos von einem Bediener an der Handwerkzeugmaschine montiert bzw. demontiert werden kann und/oder in einem vorderen, werkzeugnahen Bereich der Handwerkzeugmaschine angeordnet ist und/oder der Zusatzhandgriff stabförmig ausgebildet ist. In diesem Zusammenhang soll unter einem "Tilgermassenelement" insbesondere ein Element verstanden werden, das zumindest innerhalb eines vorgesehenen Frequenzbereichs einer Ausgangsschwingung und/oder einer Erregerschwingung zu einer Schwingung angeregt wird. Vorteilhafterweise wird zumindest eines der Tilgermassenelemente zu einer zur Ausgangsschwingung entgegenwirkenden Schwingung angeregt. Unter "vorgesehen" soll insbesondere speziell ausgestattet und/oder ausgelegt verstanden werden. Die Tilgermassenelemente können die Stöße indirekt über ein weiteres Bauteil und/oder Element, wie beispielsweise über eine Feder etc., das einen Bewegungsimpuls eines der Tilgermassenelemente auf ein weiteres der Tilgermassenelemente überträgt, gegeneinander ausführen oder besonders vorteilhaft direkt gegeneinander ausführen. Durch die erfindungsgemäße Ausgestaltung kann eine vorteilhafte Dämpfung des Zusatzhandgriffs, insbesondere eines Griffbereichs, und damit ein hoher Bedienkomfort für einen Bediener erreicht werden. Vorzugsweise erfolgt eine Schwingungsdämpfung bzw. Absorption einer Schwingungsenergie mittels einer Umwandlung der Schwingungsenergie in eine Bewegungsenergie, die zwischen den einzelnen Tilgermassenelementen mittels Stöße ausgetauscht werden kann und/oder einer Reibungsenergie der Tilgermassenelemente. Des Weiteren wird vorgeschlagen, dass zumindest ein Tilgermassenelement eine Dämpfungskenngröße aufweist, die unterschiedlich von einer Dämpfungskenngröße eines weiteren Tilgermassenelements ist, wodurch an ein differierendes Schwingungsverhalten der Handwerkzeugmaschine angepasste Dämpfungsverhalten und/oder an unterschiedliche Schwingungsfrequenzen angepasste Dämpfungsverhalten mittels der Dämpfungseinheit realisiert werden können. In diesem Zusammenhang soll unter einer "Dämpfungskenngröße" insbesondere eine Kenngröße des Tilgermassenelements verstanden werden, wie beispielsweise eine Masse, eine Größe und/oder eine Form, eine Härte und/oder weitere Materialeigenschaften des Tilgermassenelements, die ein Dämpfungsverhalten des Tilgermassenelements beeinflussen. Vorteilhafterweise umfasst hierzu die Dämpfungseinheit zumindest zehn Tilgermassenelemente und besonders vorteilhaft mehr als 25 Tilgermassenelemente. Die erfindungsgemäße Zusatzhandgriffvorrichtung ist grundsätzlich in Verbindung mit allen, dem Fachmann als sinnvoll erscheinenden Handwerkzeugmaschinen einsetzbar, bei denen insbesondere eine Führung von Handwerkzeugmaschinen mittels des Zusatzhandgriffs für einen Bediener erleichtert wird. Aufgrund ihrer Dämpfungseigenschaft ist die Zusatzhandgriffvorrichtung in Verbindung mit einer Winkelschleifmaschine besonders vorteilhaft.

Eine besonders vorteilhafte Beweglichkeit der Tilgermassenelemente bei einer Übertragung von einer Bewegungsenergie bzw. bei einer Absorption von Schwingungsenergie zwischen den einzelnen Tilgermassenelementen kann vorteilhaft erreicht werden, wenn zumindest eines der Tilgermassenelemente kugelförmig ausgebildet ist. Ist zudem das Tilgermassenelement ringförmig ausgebildet, kann insbesondere eine vorteilhafte Energieübertragung entlang einer Vorzugsrichtung, wie insbesondere entlang einer Längserstreckung des Zusatzhandgriffs erreicht werden. Das ringförmige Tilgermassenelement kann dabei eine runde oder eine scheibenförmige Querschnittsfläche und/oder weitere, dem Fachmann als sinnvoll erscheinende Querschnittsflächen aufweisen.

Ist zumindest eines der Tilgermassenelemente von einem Metallelement gebildet, kann eine besonders effektive Übertragung einer Schwingungsenergie der Handwerkzeugmaschine in Form einer Bewegungsenergie der Tilgermassenelemente auf weitere Tilgermassenelemente erzielt werden. Eine besonders kostengünstige Ausgestaltung des Tilgermassenelements kann erreicht werden, wenn das Metallelement von einem Stahlelement, insbesondere von einer Stahlkugel, gebildet ist.

Ist zumindest ein Tilgermassenelement von einem Elastomerelement, insbesondere einer Elastomerkugel, gebildet, kann hierdurch eine vorteilhafte Absorption einer Schwingungsenergie der Handwerkzeugmaschine erzielt werden. Grundsätzlich sind jedoch auch weitere, dem Fachmann als sinnvoll erscheinende Materialien zur Ausbildung der Tilgermassenelemente jederzeit möglich.

Weiterhin wird vorgeschlagen, dass der Zusatzhandgriff eine Griffhülse aufweist, die einen Aufnahmebereich zu einer zumindest teilweisen Aufnahme der Dämpfungseinheit bildet, wodurch eine konstruktiv einfache Aufnahme und eine kompakte, insbesondere Platz sparende Anordnung der Dämpfungseinheit innerhalb der Zusatzhandgriffvorrichtung erreicht werden kann.

In einer weiteren Ausgestaltung der Erfindung wird vorgeschlagen, dass die Tilgermassenelemente als dichteste Kugelpackung innerhalb des Aufnahmebereichs angeordnet sind. Hierdurch kann eine schnelle und insbesondere direkte Übertragung einer Bewegungsenergie zwischen den einzelnen Tilgermassen-elementen zwecks einer Schwingungsdämpfung erreicht werden. Hierbei soll unter einer "dichtesten Kugelpackung" insbesondere eine Anordnung der Tilgermassenelemente verstanden werden, in der die Tilgermassenelemente vorzugsweise in hexagonalen Kugelschichten angeordnet sind, wobei vorteilhafterweise jedes Tilgermassenelement zwölf nächste, von Tilgermassenelementen gebildete Nachbarn aufweist, wovon sechs innerhalb einer Schicht und jeweils drei oberhalb bzw. unterhalb der Schicht angeordnet sind.

Weiterhin wird vorgeschlagen, dass der Aufnahmebereich zumindest zwei getrennt voneinander ausgebildete Teilbereiche aufweist, die zur Aufnahme der Tilgermassenelemente vorgesehen sind. Hierdurch kann insbesondere eine vorteilhafte Trennung von Tilgermassenelementen mit vorzugsweise differierenden Dämpfungskenngrößen erreicht werden. In diesem Zusammenhang sollen unter "getrennt voneinander ausgebildeten Teilbereichen" insbesondere Teilbereiche des Aufnahmebereichs verstanden werden, die jeder für sich einen vorzugsweise geschlossenen Raum darstellen und/oder ein Austausch von Elementen, insbesondere Tilgermassenelementen, verhindert sind.

Sind die zumindest zwei getrennt voneinander ausgebildeten Teilbereiche entlang einer axialen Richtung des Zusatzhandgriffs nacheinander angeordnet, kann damit eine besonders vorteilhafte Abstimmung und/oder Anpassung von vorzugsweise unterschiedlichen Dämpfungseigenschaften der Dämpfungseinheit entlang einer Vorzugsrichtung an eine Schwingungsübertragung bzw. an eine Schwingungsausbreitung im Betrieb der Handwerkzeugmaschine erreicht werden, insbesondere wenn die Dämpfungseinheit, die zumindest teilweise in den zumindest zwei getrennt voneinander ausgebildeten Teilbereichen angeordnet ist, ein zwischen den zumindest zwei getrennt voneinander ausgebildeten Teilbereichen differierendes Dämpfungsverhalten aufweist. In diesem Zusammenhang soll unter einer "axialen Richtung" insbesondere eine Richtung verstanden werden, die sich entlang einer Länge bzw. einer Längserstreckung des Zusatzhandgriffs erstreckt.

Sind ferner die zumindest zwei getrennt voneinander ausgebildeten Teilbereiche und/oder die darin angeordneten Tilgermassenelemente auswechselbar innerhalb des Zusatzhandgriffs angeordnet, kann ein Dämpfungsverhalten vorteilhaft von einem Bediener an ein differierendes Schwingungsverhalten und/oder an unterschiedliche Betriebsmodi der Handwerkzeugmaschine angepasst werden.

Ein konstruktiv einfaches Auswechseln von Tilgermassenelementen und/oder weiteren Dämpfungselementen der Dämpfungseinheit kann erreicht werden, wenn der Zusatzhandgriff einen Endbereich aufweist, der mit der Griffhülse verschraubbar ist. In diesem Zusammenhang soll unter einem "Endbereich" insbesondere ein Bereich des Zusatzhandgriffs verstanden werden, der entlang der axialen Richtung an einem einem Ende des Zusatzhandgriffs zugewandten Bereich angeordnet ist und der entlang der axialen Richtung eine Erstreckung von vorzugsweise maximal 20 % und besonders vorteilhaft von maximal 10 % einer Längserstreckung des Zusatzhandgriffs umfasst.

In einer vorteilhaften Weiterbildung der Erfindung wird vorgeschlagen, dass die Dämpfungseinheit wenigstens ein weiteres Dämpfungsmittel zu einer zumindest teilweisen Lagerung des Tilgermassenelements aufweist. Hierdurch kann neben einer vorteilhaften Lagerung der Tilgermassenelemente eine zusätzliche Schwingungsdämpfung innerhalb der Dämpfungseinheit erzielt werden. Besonders konstruktiv einfach kann dies realisiert werden, wenn das Dämpfungsmittel von einer Dämpfungsflüssigkeit gebildet ist, in der die Tilgermassenelemente gelagert, vorzugsweise bewegbar gelagert, sind. Die Dämpfungsflüssigkeit ist vorteilhafterweise von einer reinen Flüssigkeit, von einer Suspension und/oder weiteren, dem Fachmann als sinnvoll erscheinenden Dämpfungsflüssigkeiten gebildet.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine Handwerkzeugmaschine mit einer erfindungsgemäßen Zusatzhandgriffvorrichtung in einer schematischen Darstellung,
- Fig. 2: die Zusatzhandgriffvorrichtung mit einer dichtest gepackten Anordnung von Tilgermassene- lementen einer Dämpfungseinheit in einer Schnittdarstellung,
- Fig. 3: die Zusatzhandgriffvorrichtung mit einer alternativen Dämpfungseinheit, die zu einer Ein- stellung einer Dämpfungskenngröße vorgesehen ist, in einer Schnittdarstellung und
- Fig. 4: die Zusatzhandgriffvorrichtung mit einer alternativen Dämpfungseinheit und mehreren Teil- bereichen zur Aufnahme von Tilgermassenelementen, in einer Schnittdarstellung.

### Beschreibung der Ausführungsbeispiele

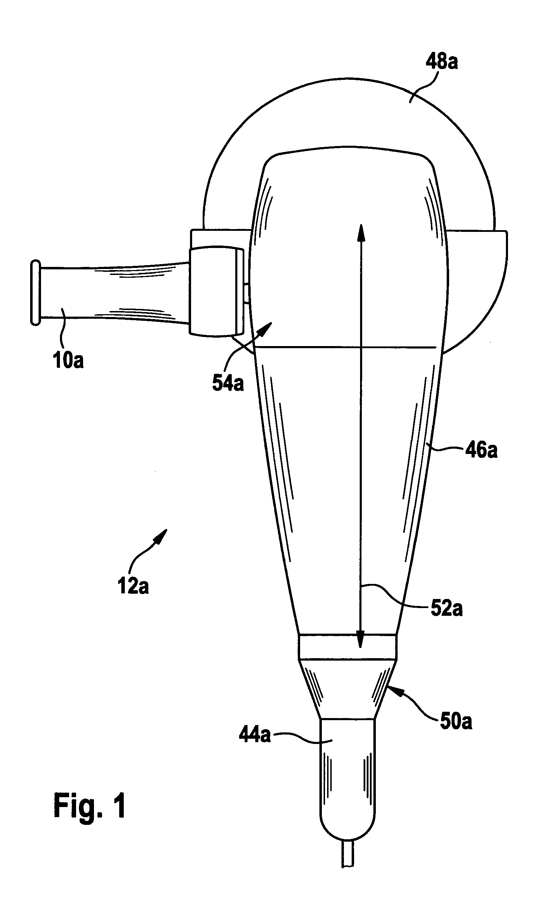

In Figur 1 ist eine von einer Winkelschleifmaschine ausgebildete Handwerkzeugmaschine 12a in einer Ansicht von oben dargestellt. Die Winkelschleifmaschine umfasst ein Gehäuse 46a und einen im Gehäuse 46a integrierten Haupthandgriff 44a. Der Haupthandgriff 44a erstreckt sich an einer einem von einer Trennscheibe gebildeten Werkzeug 48a abgewandten Seite 50a in Richtung einer Längsrichtung 52a der Winkelschleifmaschine. An einem vorderen, werkzeugnahen Bereich 54a der Winkelschleifmaschine ist eine Zusatzhandgriffvorrichtung 10a angeordnet, die sich quer zur Längsrichtung 52a der Winkelschleifmaschine erstreckt.

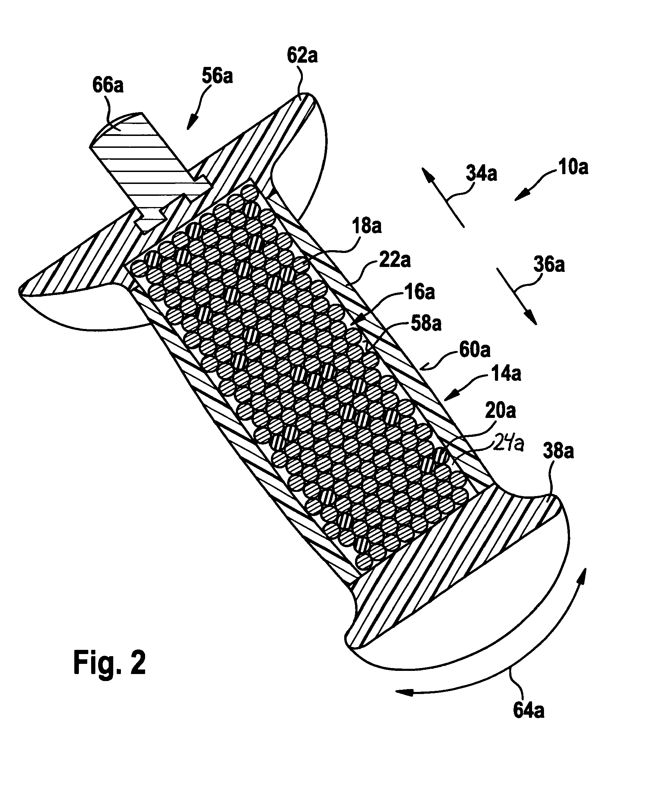

In Figur 2 ist die Zusatzhandgriffvorrichtung 10a mit einem Zusatzhandgriff 14a, einer Befestigungseinheit 56a und einer Dämpfungseinheit 16a dargestellt. Der Zusatzhandgriff 14a weist eine Griffhülse 22a auf, die sich entlang einer axialen Richtung 34a, 36a, die parallel zu einer Haupterstreckungsrichtung der Zusatzhandgriffvorrichtung 10a verläuft, erstreckt. Die Griffhülse 22a bildet mit einer radial nach innen gewandten Oberfläche 58a einen Aufnahmebereich 24a, der zu einer Aufnahme der Dämpfungseinheit 16a vorgesehen ist. Der Aufnahmebereich 24a ist entlang der axialen Richtung 34a, 36a zylinderförmig und geschlossen ausgebildet. Zudem weist der Zusatzhandgriff 14a bzw. die Griffhülse 22a an einer radial nach außen gerichteten Oberfläche 60a entlang der axialen Richtung 34a, 36a eine nach außen gewölbte Form auf, so dass eine besonders gute Griffigkeit für einen Bediener der Zusatzhandgriffvorrichtung 10a erreicht wird. Des Weiteren ist entlang der axialen Richtung 34a, 36a an Endbereichen 38a, 62a der Griffhülse 22a jeweils eine wulstartige Erhebung angeordnet. Die beiden wulstartigen Erhebungen sind ringartig in eine Umfangsrichtung 64a, die senkrecht zu der axialen Richtung 34a, 36a verläuft, an dem Zusatzhandgriff 14a angeordnet und erstrecken sich von dem Zusatzhandgriff 14a radial nach außen. Die wulstartigen Erhebungen verhindern im Betrieb der Zusatzhandgriffvorrichtung 10a ein Abrutschen einer Hand des Bedieners bei einer Führung der Handwerkzeugmaschine 12a mittels der Zusatzhandgriffvornchtung 10a bzw. während einer Kraftübertragung von dem Bediener über die Zusatzhandgriffvorrichtung 10a auf die Handwerkzeugmaschine 12a. Die Befestigungseinheit 56a, die zu einer Schraubverbindung mit der Handwerkzeugmaschine 12a vorgesehen ist, weist ein bolzenförmiges, von einem Schraubenelement gebildetes Befestigungselement 66a auf, das in axialer Richtung 36a an dem der Befestigungseinheit 56a zugewandten Endbereich 62a des Zusatzhandgriffs 14a drehfest mittels einer stoff-, kraft- und/oder formschlüssigen Verbindung an dem Zusatzhandgriff 14a angeordnet ist.

Die Dämpfungseinheit 16a, die zu einer Dämpfung von Schwingungen, die während eines Betriebs der Handwerkzeugmaschine 12a erzeugt werden, vorgesehen ist, weist mehr als 20 kugelförmige Tilgermassenelemente 18a, 20a auf. Die Tilgermassenelemente 18a, 20a sind von Metallelementen und Elastomerelementen gebildet, wobei die Metallelemente von Stahlkugeln und die Elastomerelemente von Elastomerkugeln gebildet sind. Dabei weisen die von den Stahlkugeln gebildeten Tilgermassenelemente 18a eine Dämpfungskenngröße auf, die von einer Dämpfungskenngröße der von den Elastomerkugeln gebildeten Tilgermassenelemente 20a unterschiedlich ist. Die Tilgermassenelemente 18a, 20a sind innerhalb des Aufnahmebereichs als eine dichteste Kugelpackung angeordnet.

Im Betrieb der Handwerkzeugmaschine 12a werden während eines Arbeitsprozesses Schwingungen und oder Vibrationen erzeugt, die über die Befestigungseinheit 56a auf die Zusatzhandgriffvorrichtung 10a übertragen werden. Um den Zusatzhandgriff 14a, insbesondere die Griffhülse 22a, für einen Bediener von den Schwingungen und/oder Vibrationen zu entkoppeln, ist die Dämpfungseinheit 16a innerhalb des Aufnahmebereichs 24a entlang eines Wegs einer Schwingungsübertragung der Griffhülse 22a vorgeschaltet. Eine auf die Zusatzhandgriffvorrichtung 10a übertragene Schwingungsenergie wird innerhalb der Dämpfungseinheit 16a absorbiert, indem die Tilgermassenelemente 18a, 20a zu einer Bewegung, insbesondere einer Schwingungsbewegung, angeregt werden. Dabei führen die Tilgermassenelemente 18a, 20a Stöße gegeneinander aus, wodurch eine Schwingungsbewegung bzw. ein Schwingungsimpuls zwischen den einzelnen Tilgermassenelementen 18a, 20a austauschbar ist, und/oder Reibbewegungen aneinander aus und Schwingungsenergie absorbiert wird. Gegenläufige Schwingungsimpulse von unterschiedlichen Tilgermassenelementen 18a, 20a, insbesondere von direkt zueinander benachbarten Tilgermassenelementen 18a, 20a, tragen somit zu einer zumindest teilweisen Aufhebung eines Gesamtschwingungsimpulses bzw. einer Gesamtschwingungsbewegung der Dämpfungseinheit 16a bei. Eine zusätzliche bzw. eine unterstützenden Schwingungsdämpfung wird durch Reibungskräfte, die bei einer Schwingungsbewegung der Tilgermassenelemente 18a, 20a bzw. bei Stößen zwischen den Tilgermassenelementen 18a, 20a auftreten, bewirkt. Zudem verstärken die von Elastomerkugeln gebildeten Tilgermassenelemente 20a eine Dämpfungseigenschaft, indem diese die Schwingungsenergie in eine innere Energie, wie beispielsweise eine innere Reibungsenergie, umwandeln.

Grundsätzlich ist es zudem auch denkbar, dass der der Befestigungseinheit 56a abgewandte Endbereich 34a mit der Griffhülse 22a mittels eines Gewindes verschraubbar ist und somit zumindest ein Teil der Tilgermassenelemente 18a, 20a austauschbar ist. Des Weiteren ist es auch denkbar, dass die Tilgermassenelemente 18a, 20a zwecks einer Verstärkung einer Schwingungsdämpfung in einer Dämpfungsflüssigkeit gelagert sind und/oder die Tilgermassenelemente 18a, 20a, insbesondere die von Stahlkugeln gebildeten Tilgermassenelemente 18a, von einer Elastomerhülle umgeben sind.

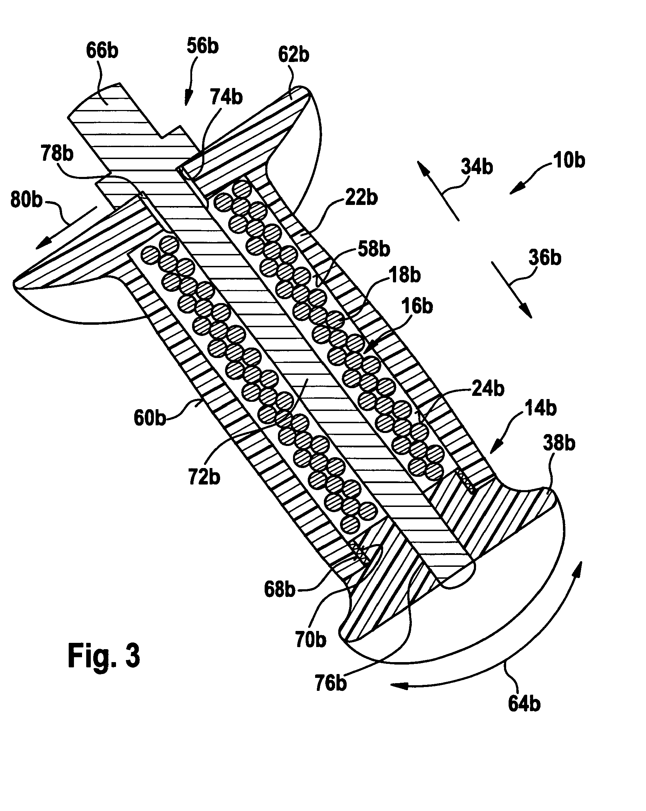

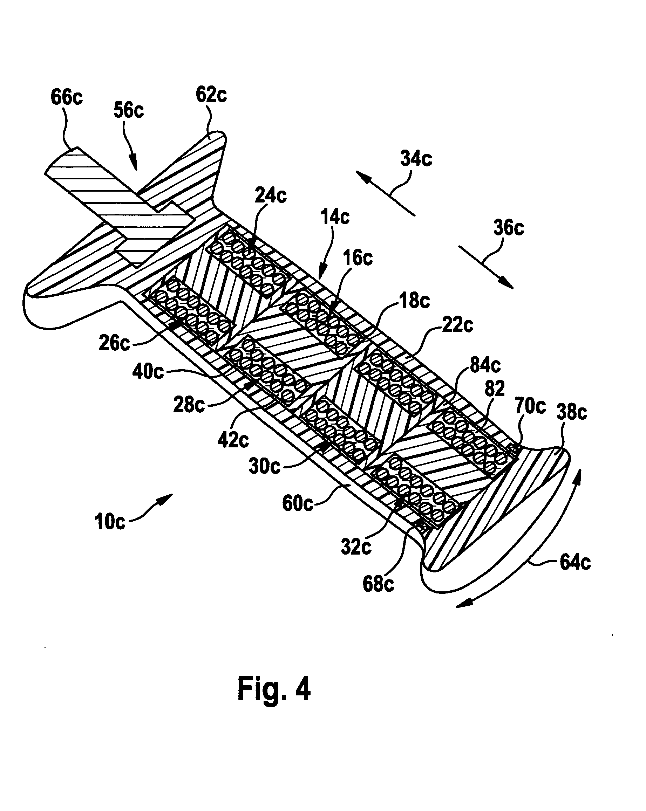

In den Figuren 3 und 4 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a bis c hinzugefügt. Die nachfolgende Beschreibung beschränkt sich im Wesentlichen auf die Unterschiede zu dem Ausführungsbeispiel in den Figuren 1 bis 2, wobei bezüglich gleich bleibender Bauteile, Merkmale und Funktionen auf die Beschreibung des Ausführungsbeispiels in den Figuren 1 bis 2 verwiesen werden kann.

In Figur 3 ist eine alternative Zusatzhandgriffvorrichtung 10b mit einer Dämpfungseinheit 16b dargestellt. Die Dämpfungseinheit 16b umfasst mehr als zehn, von Stahlkugeln gebildete Tilgermassenelemente 18b. Die Tilgermassenelemente 18b sind innerhalb eines Aufnahmebereichs 24b eines Zusatzhandgriffs 14b angeordnet und zwecks einer Schwingungsdämpfung dazu vorgesehen, Stöße gegeneinander auszuführen. In diesem Ausführungsbeispiel wurde auf eine Anordnung der Tilgermassenelemente 18b als eine dichteste Kugelpackung verzichtet, eine Schwingungsdämpfung erfolgt jedoch analog zu den Ausführungen der Figur 2. Ein einer Befestigungseinheit 56b abgewandter Endbereich 38b weist ein Gewinde 68b auf, über das er mit einem Gegengewinde 70b mit einer Griffhülse 22b des Zusatzhandgriffs 14b verschraubbar ist. Mittels des Gewindes 68b bzw. des Gegengewindes 70b kann von einem Bediener der Zusatzhandgriffvorrichtung 10b der Aufnahmebereich 24b zur Aufnahme der Tilgermassenelemente 18b in seiner Länge variiert werden und damit auch eine Dämpfung eingestellt bzw. an einen Betriebsmodus einer Handwerkzeugmaschine 12b angepasst werden. Des Weiteren ist ein Stützelement 72b mit dem der Befestigungseinheit 56b abgewandten Endbereich 38b fixiert, wobei das Stützelement 72b einteilig mit einem Befestigungselement 66b der Befestigungseinheit 56b ausgebildet ist. Das Stützelement 72b ist bolzenartig ausgebildet und erstreckt sich von einer dem Aufnahmebereich 24b zugewandten Seite 74b des Befestigungselements 66b durch einen der Befestigungseinheit 56b zugewandten Endbereich 62b, durch den Aufnahmebereich 24b und durch den der Befestigungseinheit 56b abgewandten Endbereich 38b entlang einer axialen Richtung 34b, 36b des Zusatzhandgriffs 14b. Hierzu weist der der Befestigungseinheit 56b abgewandte Endbereich 38b eine Ausnehmung 76b auf, in der das Stützelement 72b mit dem Endbereich 38b fixiert ist, wie beispielsweise über ein Gewinde etc. Der der Befestigungseinheit 56b zugewandte Endbereich 62b weist ebenfalls eine Ausnehmung 78b in einem in radialer Richtung 80b mittleren Teilbereich auf, wobei die Ausnehmung 78b einen größeren Durchmesser aufweist als ein Durchmesser des Stützelements 72b. Hierdurch ist das Stützelement 72b beabstandet zu dem Endbereich 62b angeordnet und eine direkte und insbesondere unerwünschte Übertragung von Schwingungen von dem Stützelement 72b auf die Griffhülse 22b des Zusatzhandgriffs 14b wird damit verhindert. Grundsätzlich ist es jedoch auch denkbar, dass zwischen dem Stützelement 72b und dem der Befestigungseinheit 56b zugewandten Endbereich 62b ein Dämpfungselement, wie beispielsweise ein aus einem Elastomer gebildetes Dämpfungselement, angeordnet ist.

In Figur 4 ist eine alternative Zusatzhandgriffvorrichtung 10c mit einer Dämpfungseinheit 16c dargestellt. Die Dämpfungseinheit 16c umfasst mehr als 20 ringförmig ausgebildete Tilgermassenelemente 18c, wobei eine Schwingungsdämpfung analog zu den Ausführungen der Figur 2 erfolgt. Grundsätzlich sind aber auch weitere Formen und/oder Materialien, wie beispielsweise kugelförmige Tilgermassenelemente, ein Elastomerelement usw., in einer alternativen Ausbildung jederzeit denkbar. Die Tilgermassenelemente 18c sind innerhalb eines Aufnahmebereichs 24c eines Zusatzhandgriffs 14c angeordnet, wobei der Aufnahmebereich 24c vier getrennt voneinander ausgebildete Teilbereiche 26c, 28c, 30c, 32c zur Aufnahme der Tilgermassenelemente 18c aufweist. Die vier Teilbereiche 26c, 28c, 30c, 32c umfassen jeweils eine ringartige Kammer 82c mit einer die Kammer 82c umgebenden Wandung 84c. Zudem sind die vier Teilbereiche 26c, 28c, 30c, 32c entlang einer axialen Richtung 34c, 36c nacheinander innerhalb des Zusatzhandgriffs 14c angeordnet. Innerhalb der Teilbereiche 26c, 28c, 30c, 32c sind die Tilgermassenelemente 18c jeweils in einem von einer Dämpfungsflüssigkeit 42c gebildeten Dämpfungsmittel 40c gelagert, wobei eine Dämpfungskenngröße der Dämpfungsflüssigkeiten 42c von Teilbereich 26c, 28c, 30c, 32c zu Teilbereich 26c, 28c, 30c, 32c variiert. Es ist jedoch auch denkbar, dass nur einer der Teilbereiche 26c, 28c, 30c, 32c eine Dämpfungsflüssigkeit 42c zur Lagerung der Tilgermassenelemente 18c aufweist. Ein einer Befestigungseinheit 56c abgewandter Endbereich 38c weist ein Gewinde 68c auf, über das er mit einem Gegengewinde 70c mit einer Griffhülse 22c des Zusatzhandgriffs 14c verschraubbar ist. Hierdurch sind für einen Bediener der Zusatzhandgriffvornchtung 10b einzelne und/oder alle Teilbereiche 26c, 28c, 30c, 32c zusammen mit den darin angeordneten Tilgermassenelementen 18c auswechselbar innerhalb des Aufnahmebereichs 24c angeordnet, so dass von dem Bediener ein Dämpfungsverhalten der Dämpfungseinheit bzw. der Zusatzhandgriffvorrichtung 10c an ein Schwingungsverhalten im Betrieb einer Handwerkzeugmaschine 12c anpassbar ist. Grundsätzlich ist es jedoch auch denkbar, dass nur die Tilgermassenelemente 18c zumindest einem der Teilbereiche 26c, 28c, 30c, 32c auswechselbar angeordnet sind und die Teilbereiche 26c, 28c, 30c, 32c fest innerhalb der Griffhülse 22c angeordnet sind.

## Patentansprüche

1. Zusatzhandgriffvorrichtung, insbesondere für eine Handwerkzeugmaschine (12a), mit einem Zusatzhandgriff (14a) und einer Dämpfungseinheit (16a), wobei die Dämpfungseinheit (16a) zumindest zwei Tilgermassenelemente (18a, 20a) aufweist, die dazu vorgesehen sind, zu einer Schwingungsdämpfung Stöβe gegeneinander auszuführen, **dadurch gekennzeichnet, dass**_zumindest ein Tilgermassenelement (18a) eine Dämpfungskenngröße aufweist, die unterschiedlich von einer Dämpfungskenngröße eines weiteren Tilgermassenelements (20a) ist.

2. Zusatzhandgriffvorrichtung nach Anspruch 1, **dadurch gekennzeichnet, dass** die Dämpfungseinheit (16a) zumindest zehn Tilgermassenelemente (18a, 20a) aufweist

3. Zusatzhandgriffvorrichtung nach einem der vorhergehenden Ansprüche, **dadurch gekennzeichnet, dass** zumindest eines der Tilgermassenelemente (18a, 20a) kugelförmig ausgebildet ist.

4. Zusatzhandgriffvorrichtung nach einem der vorhergehenden Ansprüche, **dadurch gekennzeichnet, dass** zumindest eines der Tilgermassenelemente (18a) von einem Metallelement gebildet ist.

5. Zusatzhandgriffvorrichtung nach einem der vorhergehenden Ansprüche, **dadurch gekennzeichnet, dass** zumindest eines der Tilgermassenelemente (20a) von einem Elastomerelement gebildet ist.

6. Zusatzhandgriffvorrichtung nach einem der vorhergehenden Ansprüche, **dadurch gekennzeichnet, dass** der Zusatzhandgriff (14a) eine Griffhülse (22a) aufweist, die zumindest teilweise einen Aufnahmebereich (24a) zu einer Aufnahme der Dämpfungseinheit (16a) bildet.

7. Zusatzhandgriffvorrichtung zumindest nach Anspruch 6, **dadurch gekennzeichnet, dass** die Tilgermassenelemente (18a, 20a) als dichteste Kugelpackung innerhalb des Aufnahmebereichs (24a) angeordnet sind.

8. Zusatzhandgriffvorrichtung nach einem der vorhergehenden Ansprüche, **dadurch gekennzeichnet, dass** die Dämpfungseinheit wenigstens ein weiteres Dämpfungsmittel zu einer zumindest teilweisen Lagerung der Tilgermassenelemente aufweist.

9. Zusatzhandgriffvorrichtung zumindest nach Anspruch 8, **dadurch gekennzeichnet, dass** das Dämpfungsmittel von einer Dämpfungsflüssigkeit gebildet ist.

10. Handwerkzeugmaschine; insbesondere eine Winkelschleifmaschine, mit einem Haupthandgriff (44a) und einer Zusatzhandgriftvorrichtung (10a) nach einem der vorhergehenden Ansprüche.

## Claims

1. Auxiliary handle device, in particular for a portable power tool (12a), comprising an auxiliary handle (14a) and a damping unit (16a), wherein the damping unit (16a) has at least two absorption mass elements (18a, 20a) which are intended for colliding with one another in order to dampen vibrations, **characterized in that** at least one absorption mass element (18a) has a damping characteristic which is different from a damping characteristic of a further absorption mass element (20a).

2. Auxiliary handle device according to Claim 1, **characterized in that** the damping unit (16a) has at least ten absorption mass elements (18a, 20a).

3. Auxiliary handle device according to either of the preceding claims, **characterized in that** at least one of the absorption mass elements (18a, 20a) is of spherical design.

4. Auxiliary handle device according to one of the preceding claims, **characterized in that** at least one of the absorption mass elements (18a) is formed by a metal element.

5. Auxiliary handle device according to one of the preceding claims, **characterized in that** at least one of the absorption mass elements (20a) is formed by an

6. Auxiliary handle device according to one of the preceding claims, **characterized in that** the auxiliary handle element (14a) has a grip sleeve (22a) which at least partly forms an accommodating region (24a) for accommodating the damping unit (16a).

7. Auxiliary handle device at least according to Claim 6, **characterized in that** the absorption mass elements (18a, 20a) are arranged as the densest packing of spheres inside the accommodating region (24a).

8. Auxiliary handle device according to one of the preceding claims, **characterized in that** the damping unit has at least one further damping means for at least partly mounting the absorption mass elements.

9. Auxiliary handle device at least according to Claim 8, **characterized in that** the damping means is formed by a damping fluid.

10. Portable power tool, in particular an angle grinder, comprising a main handle (44a) and an auxiliary handle device (10a) according to one of the preceding claims.

## Revendications

1. Système de poignée supplémentaire, notamment pour une machine-outil (12a), avec une poignée supplémentaire (14a) et une unité d'amortissement (16a), l'unité d'amortissement (16a) comportant au moins deux éléments de masse amortissante (18a, 20a) conçus pour amortir les oscillations des chocs les unes par rapport aux autres, **caractérisé en ce qu'**au moins un élément de masse amortissante (18a) présente une grandeur caractéristique d'amortissement différant d'une grandeur caractéristique d'amortissement d'un autre élément de masse amortissante (20a).

2. Système de poignée supplémentaire selon la revendication 1, **caractérisé en ce que** l'unité d'amortissement (16a) comporte au moins dix éléments de masse amortissante (18a, 20a).

3. Système de poignée supplémentaire selon l'une quelconque des revendications précédentes, **caractérisé en ce qu'**au moins un des éléments de masse amortissante (18a, 20a) présente une forme sphérique.

4. Système de poignée supplémentaire selon l'une quelconque des revendications précédentes, **caractérisé en ce qu'**au moins un des éléments de masse amortissante (18a) prend la forme d'un élément métallique.

5. Système de poignée supplémentaire selon l'une quelconque des revendications précédentes, **caractérisé en ce qu'**au moins un des éléments de masse amortissante (20a) prend la forme d'un élément en élastomère.

6. Système de poignée supplémentaire selon l'une quelconque des revendications précédentes, **caractérisé en ce que** la poignée supplémentaire (14a) forme un fourreau de poignée (22a) formant au moins en partie une zone de logement (24a) permettant de loger l'unité d'amortissement (16a).

7. Système de poignée supplémentaire selon la revendication 6 au moins, **caractérisé en ce que** les éléments de masse amortissante (18a, 20a) prennent la forme d'un emballage sphérique extrêmement étanche à l'intérieur de la zone de logement (24a).

8. Système de poignée supplémentaire selon l'une quelconque des revendications précédentes, **caractérisé en ce que** l'unité d'amortissement comporte au moins un moyen d'amortissement supplémentaire permettant un positionnement au moins partiel des éléments de masse amortissante.

9. Système de poignée supplémentaire selon la revendication 8 au moins, **caractérisé en ce que** le moyen d'amortissement est réalisé à partir d'un fluide d'amortissement.

10. Machine-outil, notamment meuleuse d'angle, avec une poignée principale (44a) et un système de poignée supplémentaire (10a) selon l'une quelconque des revendications précédentes.
